# EUROPÄISCHE PATENTSCHRIFT

(11) **EP 2 686 145 B1**
(45) Veröffentlichungstag und Bekanntmachung des Hinweises auf die Patenterteilung: **11.02.2015**
(21) Anmeldenummer: 12709535.4
(22) Anmeldetag: 13.03.2012
(51) Int. Cl.: B23Q 1/54, B66F 7/22, B25J 9/00, B25J 11/00, B25J 17/02, A61G 7/008

(54) **PARALLELMANIPULATOR MIT ZWEI SPHÄRISCHEN TEILMANIPULATOREN**
MANIPULATOR
MANIPULATEUR

(30) Priorität: 17.03.2011 DE 102011014365; 09.02.2012 DE 102012002400
(43) Veröffentlichungstag der Anmeldung: 22.01.2014
(73) Patentinhaber: EB-invent GmbH, 72213 Altensteig-Walddorf (DE)
(72) Erfinder: EHRENLEITNER, Franz, 72213 Altensteig-Walddorf (DE)
(74) Vertreter: Patentanwälte Barger, Piso & Partner
(86) Internationale Anmeldenummer: PCT/EP2012/001111
(87) Internationale Veröffentlichungsnummer: WO 2012/123102

(56) Entgegenhaltungen:
- WO-A1-84/04503
- WO-A1-03/066288
- US-A1- 2007 173 976
- Xianwen Kong and Clément M. Gosselin: "Type Synthesis of Three-Degree-of-Freedom Spherical Parallel Manipulators", The International Journal of Robotics Research, Bd. 23, Nr. 3 März 2004 (2004-03), Seiten 237-245, XP002675880, DOI: 10.1177/0278364904041562 Gefunden im Internet: URL:http://ijr.sagepub.com/content/23/3/23 7.full.pdf+html [gefunden am 2012-05-10]

## Beschreibung

Die Erfindung betrifft einen Manipulator, nämlich eine Vorrichtung zum Drehen eines Objektes entsprechend dem Oberbegriff des Anspruches 1.

Eine solche Vorrichtung ist aus KONG Xianwen und GOSSELIN Clement, "Type Synthesis of Three-Degree-of-Freedom Spherical Parallel Manipulators" in The International Journal of Robotics Research, Vol. 23, No. 3, März 2004, Seiten 237 bis 245 bekannt.

Manipulatoren, mit denen Gegenstände, meist massereiche und großformatige Gegenstände, wie LKW-Chassis oder auch Flugzeugaufbauten, Schweißteile, um eine horizontale Achse verdrehbar gelagert sind, um besser für Reparatur- oder Montagearbeiten zugänglich zu sein, sind in Form von sogenannten Rhönrad-Wendern bekannt. Je nach gewünschtem Schwenkwinkel werden dabei zumindest zwei konzentrisch angeordnete, geschlossene Kreisführungen oder offene Kreisbogenführungen, im folgenden unter Kreisführungen zusammengefasst, passend auf Rollen oder in Gegenführungen verschieblich gelagert, sodass ein Gegenstand, der an der Kreisführung befestigt ist, eine Drehbewegung um die Achse vollführt, die durch die beiden Kreismittelpunkte definiert ist.

Zufolge dieses Aufbaus ist der Durchmesser des Rhönrades im Wesentlichen durch die Umgebung nach oben begrenzt und damit ist auch die jeweilige maximale Höhe der Drehachse über der Basis der Rhönradvorrichtung gegeben. In vielen Fällen ist es notwendig, den zu bearbeitenden Gegenstand so zu montieren, dass sein Schwerpunkt oberhalb der Drehachse liegt, was zu einer intrinsisch instabilen und gefährlichen Situation führt, weil beim Versagen der Bremsen bzw. der Antriebe der Gegenstand um bis zu 180° überrollen kann. Weiters ist durch diese relativ niedrige Lage der Drehachse bei seitlich ausladenden Gegenständen die Gefahr gegeben, dass dessen äußerste Teile am Boden anstoßen bzw. wird durch diese Gefahr der Drehwinkel so beschränkt, dass die Zugänglichkeit darunter leidet.

Wendevorrichtungen wären vorteilhaft, wenn ein liegender Patient gegenüber einem Diagnosegerät oder einem Behandlungsgerät bzw. Arzt in passende Position gebracht werden soll, ohne dass der Patient gegenüber dem Bett bewegt werden soll, sind aber nur in Form von verstellbaren Kopfteilen bzw. Fußteilen von Betten etc. bekannt. Darüber hinaus soll, auch bei anderen Gelegenheiten, beispielsweise bei Krankenbetten, bei Untersuchungsstühlen oder Behandlungsstühlen, insbesondere im zahnmedizinischen oder gynäkologischen Bereich; bei sogenannten Shuttlen zum Transport von Patienten insbesondere die relative Höhenlage zwischen dem Kopf und den Beinen des Patienten möglichst einfach und zuverlässig verstellbar sein.

Die Erfindung hat das Ziel eine Vorrichtung anzugeben, die diese Nachteile nicht aufweist, platzsparend ist, insbesondere auch ohne die kostspieligen Kreis- bzw. Kreisbogenführungen auskommt, die Zugänglichkeit zur Unterseite des jeweils aufgespannten Gegenstandes verbessert und die Sicherheit erhöht. Besonders beabsichtigt ist auch die Erweiterung des Einsatzgebietes derartiger Manipulatoren, insbesondere auf den medizinischen Bereich.

Erfindungsgemäß werden diese Ziele durch eine Vorrichtung erreicht, wie Sie im kennzeichnenden Teil des Anspruches 1 definiert ist.

Mit anderen Worten, es werden die freien Enden zweier Teilmanipulatoren mit jeweils drei Drehachsen, die einander in einem Punkt schneiden, mittels eines um parallele Drehachsen drehbaren Zwischenstücks verbunden, auf dem eine Montageplatte für den zu manipulierenden Gegenstand vorgesehen bzw. ausgebildet ist. Bevorzugt ist die Montageplatte am Zwischenstück in einer Richtung verschieblich befestigt, die parallel zur Wendeachse verläuft.

Auf diese Weise ist es möglich, die Drehachse des Objekts nahezu beliebig hoch vorzusehen und damit sicher zu stellen, dass der Schwerpunkt des Objekts (darunter fallen auch Patienten) stets tiefer liegt als die Drehachse. Es kann daher selbst beim Ausfall sämtlicher Antriebe und Bremsen zu keinem Überrollen des Objektes kommen, sondern nur zu einem Auspendeln. Durch die Erfindung wird eine asymmetrische Anordnung der Steher bzw. Basen der beiden Teilmanipulatoren bezüglich der Vertikalebene durch die Drehachse möglich und somit eine hervorragende Zugänglichkeit zur Unterseite des Objekts gegeben. Durch die Ausgestaltung mit einer beweglichen Spannplatte bezüglich des Zwischenstücks werden die Zugänglichkeit und die Schwenkmöglichkeit weiter erhöht. In einer Ausgestaltung sind die beiden Teilmanipulatoren symmetrisch zueinander bezüglich der Symmetrieebene zwischen den beiden Zentralpunkten aufgebaut und angeordnet, dies ist wegen der einfachen Lagerhaltung und Konstruktion beim Bau und der Wartung vorteilhaft, doch ist dies nicht notwendig.

Dazu kommt als vollständig unerwartete Anwendungsmöglichkeit der Fall, bei dem die Drehachse nicht hoch sondern tief vorgesehen wird und das aufgespannte Objekt beispielsweise eine zu biegende Blechplatte ist. Es kann sodann das Blech durch Betätigen der Vorrichtung um die Schwenkachse, die dann der Biegelinie entspricht, bei einer entsprechend gebauten Biegevorrichtung passend gebogen werden, wobei einerseits besonders große Kräfte angewandt werden können, andererseits auch komplexe Abfolgen von Biegevorgängen vorgenommen werden können.

Die erfindungsgemäße Vorrichtung kann auch bei anderen Anwendungsgebieten vorteilhaft eingesetzt werden, so bei Werkzeugmaschinen, insbesondere bei Fräsmaschinen, bei denen die Werkzeugachse um eine Achse, meist eine (gedachte) Linie auf der Oberfläche des Werkstückes, geschwenkt werden soll. Auch bei Robotern, die Werkstücke halten und bewegen sollen, kann die erfindungsgemäße Vorrichtung verwendet werden, beispielsweise um eine virtuelle Handachse zu schaffen.

Die Erfindung wird im Folgenden anhand der Zeichnung näher erläutert. Dabei zeigt bzw. zeigen
die Fig. 1 eine Rhönrad-Wendevorrichtung gemäß dem Stand der Technik in vier verschiedenen Ansichten,
die Fig. 2 eine erfindungsgemäße Vorrichtung in vier verschiedenen Ansichten,
die Fig. 3 eine Ansicht der Vorrichtung der Fig. 2 mit einem aufgespannten Flugzeug in waagrechter Position,
die Fig. 4 die Vorrichtung der Fig. 3 in geneigter Position in drei unterschiedlichen Ansichten,
die Fig. 5 und 6 die Vorrichtung der Fig. 2 mit einem montierten KFZ-Chassis zur Darstellung der unterschiedlichen Montagesituationen in Ansichten entsprechend denen der Fig. 3 und 4,
die Fig. 7 eine erfindungsgemäße Vorrichtung in ihrer Ausführung als Biegevorrichtung für Bleche in drei verschiedenen Ansichten,
die Fig. 8 eine Draufsicht auf die Vorrichtung gemäß der Fig. 7 in drei unterschiedlichen Lagen,
die Fig. 9a und 9b ein Patienten-Shuttle mit einer erfindungsgemäßen Vorrichtung in Draufsicht und Seitenansicht,
die Fig. 10 die Vorrichtung der Fig. 9 in drei unterschiedlichen Positionen in perspektivischer Ansicht,
die Fig. 11 die Vorrichtung der Fig. 9 in drei unterschiedlichen Positionen in Seitenansicht,
die Fig. 12 die Vorrichtung der Fig. 9 in drei gemeinsam gezeichneten unterschiedlichen Positionen in Seitenansicht,
die Fig. 13 eine Draufsicht und
die Fig. 14 die Anwendung an einen Fräskopf.

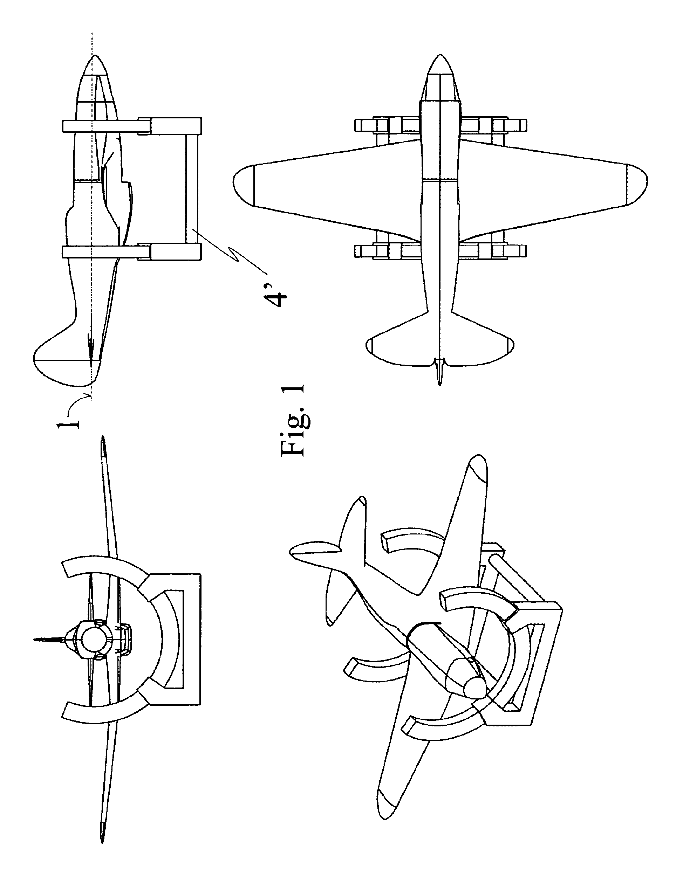

Die Fig. 1 zeigt eine Wendevorrichtung entsprechend dem Stand der Technik in vier verschiedenen Ansichten. Die dargestellte Vorrichtung ist in der Lage, ein größeres Objekt, beispielsweise das dargestellte Sportflugzeug, um eine vorgegebene Wendeachse 1 zu drehen. Dabei wird, auch dann wenn keine 180° Verschwenkung möglich ist, der Begriff Wendevorrichtung bzw. Wendeachse benutzt. Wie aus der Darstellung ersichtlich ist, hängt die Lage der Wendeachse vom Durchmesser des Rhönrades ab, der wiederum von den baulichen Gegebenheiten begrenzt wird. Im dargestellten Beispiel verläuft die Wendeachse 1 im Bereich des Schwerpunktes des montierten Objektes, was wegen der leichteren Drehbarkeit gegenüber einem großen Abstand günstig ist. Andererseits müsste aber aus Sicherheitsgründen stets sichergestellt sein, dass der Schwerpunkt des Objekts sich zuverlässig unterhalb der Wendeachse 1 befindet, um beim Ausfall des Antriebs bzw. der Fixierung des Rhönrads ein Überschlagen der gesamten Vorrichtung zu verhindern. Diese Bedingung kann bei den Vorrichtungen gemäß dem Stand der Technik oft nicht erfüllt werden.

Der Fig. 1 ist weiters gut zu entnehmen, dass die beiden Rhönräder, die zum Aufbau der Vorrichtung benötigt werden, samt ihrer Lagerung den Zugang zur Unterseite des aufgespannten Objektes erschweren, auch wenn die eingezeichneten Verbindungsrohre 4' zwischen den beiden Rhönrädern bzw. deren Lagerungen in realitas unterhalb der Bodenoberfläche liegen bzw. durch Einzelfundamente ersetzt sind, in Fig. 1 sind diese Rohre eingetragen, um die Zusammengehörigkeit der Lager zu zeigen.

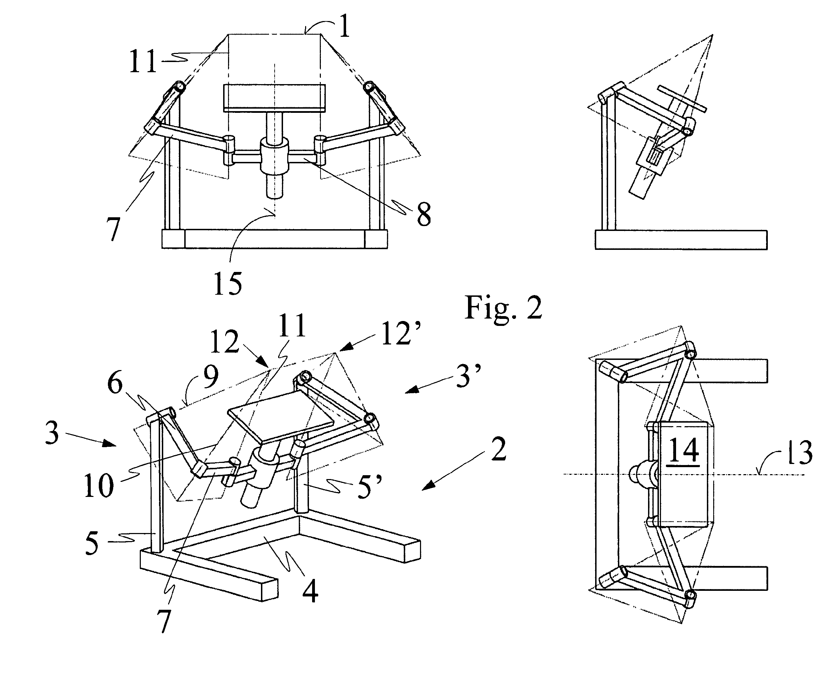

Die Erfindung ist in schematischer Ausbildung in Fig. 2 dargestellt. Eine erfindungsgemäße Vorrichtung 2 besteht aus zwei Teilmanipulatoren 3, 3', deren Basisteile 5, 5' unbeweglich zueinander angeordnet sind, wie ein Verbindungsbalken 4 andeutet, der ebenso wie die Verbindungsrohre 4' der Fig. 1 bei entsprechender Montage der Basisteile 5, 5' der Teilmanipulatoren 3, 3' im Hallenfundament gegeben ist.

Der Teilmanipulator 3 besteht neben dem bereits genannten Basisteil 5 aus einem Oberarm 6, der mit dem Basisteil 5 um eine Basisachse 9 verschwenkbar ist. Am freien Ende des Oberarms 6 ist ein Unterarm 7 um eine Armachse 10 verschwenkbar montiert. Die Armachse und die Basisachse schneiden einander in einem Zentralpunkt 12. Am freien Ende des Unterarms 7 ist ein Zwischenstück 8 um eine Endachse 11 des Unterarms 7 verschwenkbar angeordnet, die Endachse 11 geht ebenfalls durch den Zentralpunkt 12.

Der zweite Teilmanipulator 3' ist im dargestellten Ausführungsbeispiel völlig gleichartig zum Teilmanipulator 3 aufgebaut, und dies mit der Maßgabe, dass seine Anordnung symmetrisch zu einer Symmetrieebene 13 zwischen den beiden Zentralpunkten 12, 12' erfolgt. Damit verläuft die Symmetrieebene auch lotrecht zwischen den Basisteilen 5, 5' und durch die Mitte des Zwischenstückes 8. Die Einhaltung dieser Bedingungen ist zwar aus fertigungstechnischen Gründen vorteilhaft, aber für die Erreichung des erfindungsgemäßen Zwecks nicht notwendig. Insbesondere wenn die Arbeitsabläufe asymmetrische Maximalbewegungen verlangen, kann ein dies berücksichtigender, entsprechend asymmetrischer Aufbau der Teilmanipulatoren vorteilhaft sein.

Die Verbindungsgerade zwischen den beiden Zentralpunkten 12, 12' stellt die Wendeachse 1 der erfindungsgemäßen Vorrichtung für das Zwischenstück 8 und darauf montierte Objekte dar. Dazu ist noch Folgendes näher auszuführen:
Die Endachsen 11, 11' liegen im dargestellten Ausführungsbeispiel in jeder Stellung des Manipulators 2 in jeweils einer Normalebene auf die Wendeachse 1. Auch dies ist zum Erreichen des Erfindungszieles nicht notwendig. Am Zwischenstück 8 ist bevorzugt ein Objekthalter 14 entlang einer Halterachse 15 verschieblich und fixierbar angeordnet, die Halterachse 15 schneidet die Wendeachse 1. Damit ist es möglich, unterschiedlich große bzw. geformte Werkstücke in die optimale Position zur Bearbeitung zu bringen. Statt der schematisch dargestellten einfachen Ausführung der Verschiebemechanik sind selbstverständlich Ausgestaltungen möglich, bei denen mehrere linear verschiebliche Elemente vorgesehen sind, bedeutsam ist aber, dass die Verschiebung in Richtung zu bzw. von der Wendeachse 1 erfolgt.

Wie aus der Zusammenschau der einzelnen Darstellungen der Fig. 2 leicht ersichtlich ist, ist durch die in Richtung der Wendeachse 1 gesehene asymmetrische Ausbildung der Vorrichtung 2 beste Zugänglichkeit zum Objekt (einschließlich eines Patienten) erreichbar und es sind insbesondere die Basisteile 5, 5' für den Zugang zur Unterseite des Objekts wesentlich weniger störend als die ausgedehnten Rhönräder samt ihrer Lagerung.

Da die Ausrichtung der Achsen: Basisachse 9, Armachse 10 und Endachse 11 ebenso wie die Länge des Oberarms und des Unterarms in weiten Grenzen frei gewählt werden kann, ist es möglich, die Zentralpunkte 12, 12' in nahezu beliebige Höhen zu legen, nur die seitliche Auslenkung, die pro Winkeleinheit erfolgt, setzt hier Grenzen. Die Stabilität der Vorrichtung ist groß, die benötigten Bauteile und Lager sind kostengünstig und robust. Als Antriebe können, wie im Stand der Technik bekannt, Motoren in den Lagern, aber, wenn die zu erreichenden Winkellagen es zulassen, auch Aktuatoren zwischen den Armen eingesetzt werden. Es können derartige Aktuatoren auch direkt am Zwischenglied oder am Objekthalter und in Sonderfällen auch am Objekt angreifen. In diesen Fällen ist die Aufgabe der Vorrichtung nur die Führung des Objektes. Dass zusätzlich Bremsen und Sicherheitsvorrichtungen vorgesehen sind, berührt die Erfindung an sich nicht und wird daher hier nicht näher erläutert.

Aus den kinematischen Zusammenhängen, wie sie aus der Zusammenschau der einzelnen Darstellungen der Fig. 2 ersichtlich sind, ist leicht ersichtlich, dass die horizontale Lage der Wendeachse 1 oberhalb des Verbindungsbalkens 4, der den Bodenbereich andeutet, sehr weit nach oben gelegt werden kann, sodass es möglich ist den Schwerpunkt des aufgespannten Objekts zuverlässig tiefer als die Wendeachse 1 zu positionieren. Zugleich wird in der Ausgestaltung der Erfindung, bei der der Objekthalter 14 bezüglich des Zwischenstückes 8 verschieblich und fixierbar gelagert ist, eine einfache Anpassung des Abstands zwischen Schwerpunkt des Objekts und Wendeachse möglich. Zum Objekthalter 14 soll noch ausgeführt werden, dass dieser in den Figuren der Einfachheit halber als rechteckige Platte dargestellt ist, bei tatsächlichen Ausbildungen ist eine Anpassung an das jeweilige Objekt (z.B. als Liege für einen Patienten) leicht anwendbar.

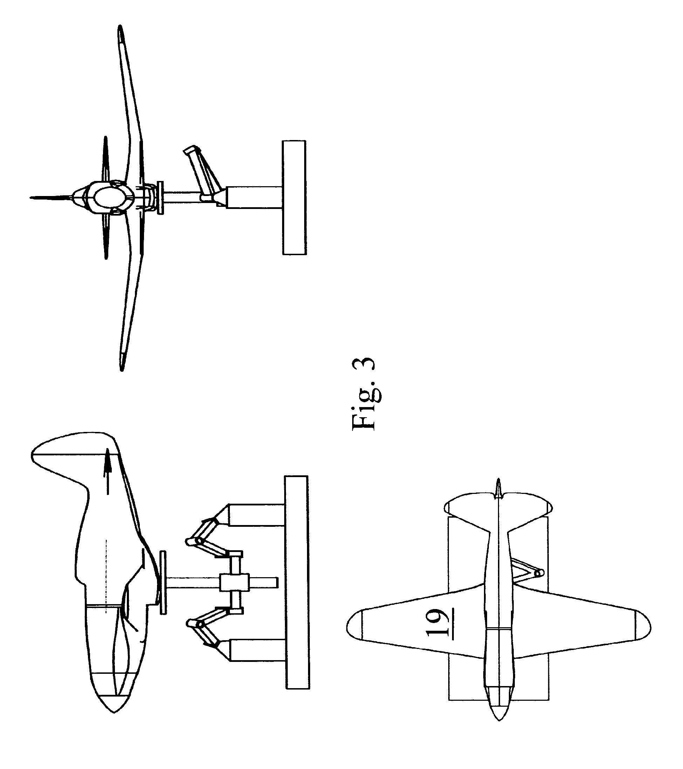

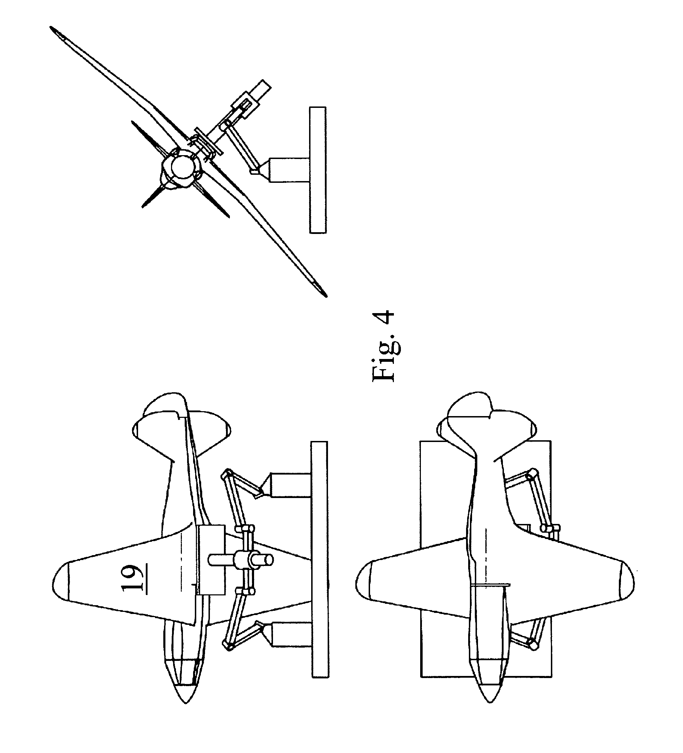

Die Fig. 3 und 4 zeigen die Aufspannsituation und die Objektlage bei Verwendung einer erfindungsgemäßen Vorrichtung 2 für ein Sportflugzeug entsprechend dem der Fig. 1. Speziell aus der Fig. 4 ist die hervorragende Zugänglichkeit gut zu entnehmen, die Fig. 3 zeigt die in Achsenrichtung vorhandene Asymmetrie der Vorrichtung 2, durch die es möglich wird, insbesondere bei Objekten, bei denen "asymmetrisch" Schritte zu setzen sind, diese in der jeweils bestmöglich passenden Richtung aufzuspannen. Die Zusammenschau mit Fig. 2 zeigt, welche Möglichkeiten der Anordnung und Orientierung der Achsen und der Länge und Lage der Arme und der Basis die Erfindung bietet, die Wendeachse 1 befindet sich bei dieser Auslegung in der Vertikalebene durch die beiden Basen 5, 5'; d.h., dass die Basisachsen 9, 9' in dieser Vertikalebene liegen.

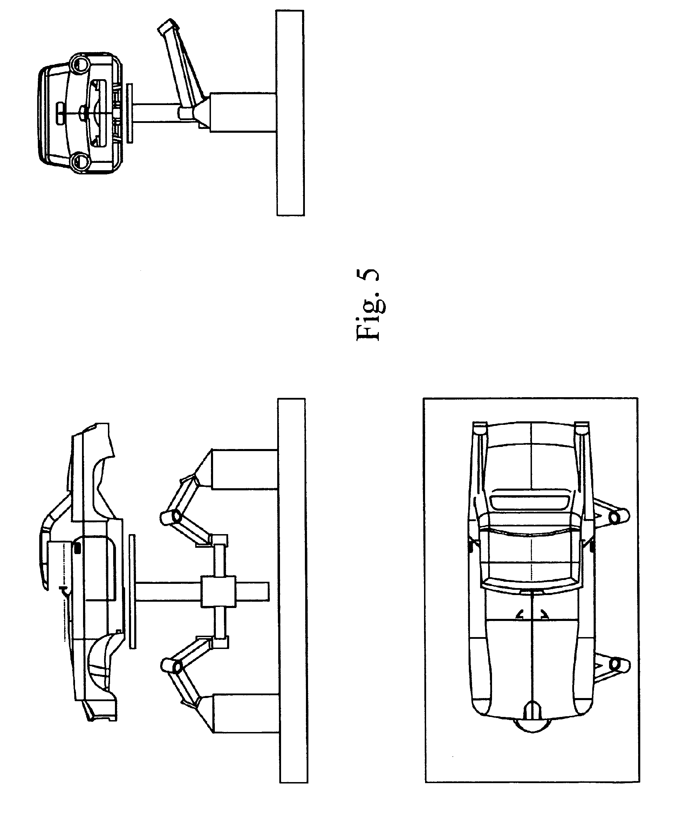

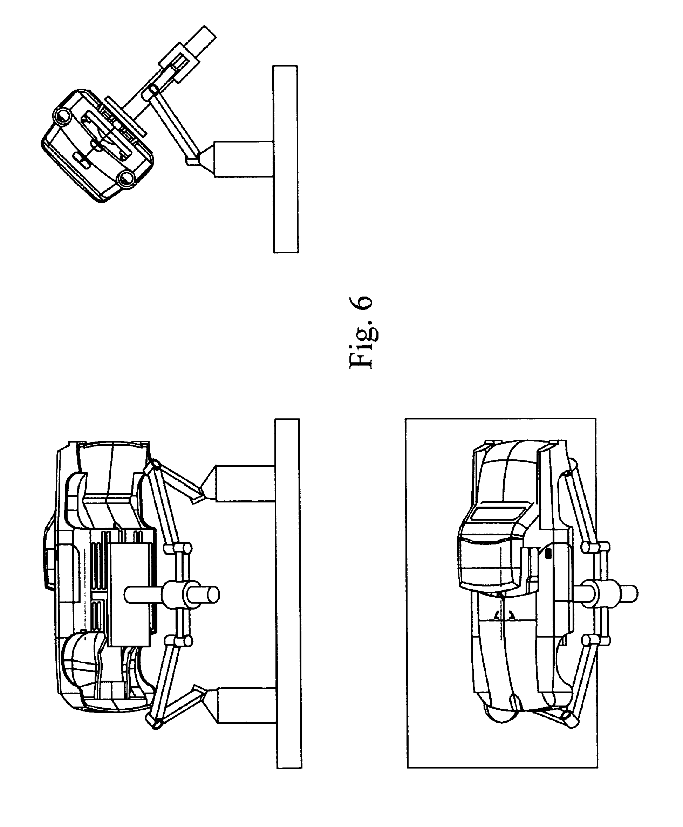

Die Fig. 5 und 6 zeigen analoge Situationen wie die Fig. 3 und 4 bei einer aufgespannten Kraftfahrzeugkarosserie, auch hier ist die gute Zugänglichkeit deutlich erkennbar.

Die Erfindung ermöglicht es daher ebenso wie das Rhönrad, ein Objekt (einschließlich eines Patienten) um eine mechanisch nicht verwirklichte Wendeachse zu drehen. Dabei sind die Gestaltungsmöglichkeiten für die Lage der Wendeachse bezüglich der Basis der Vorrichtung gegenüber dem Rhönrad deutlich verbessert und es ist stets die Möglichkeit gegeben, den Schwerpunkt des Objektes tiefer anzuordnen als die Wendeachse, was aus Sicherheitsgründen wichtig ist. Weiters ist es möglich, auf asymmetrische Zugänglichkeitsbedingungen, sowohl in Richtungen quer zur Wendeachse als auch längs der Wendeachse einzugehen. Darüberhinaus ermöglicht die Erfindung die Verwendung der Vorrichtung auf Anwendungsgebieten, die dem Rhönrad verschlossen sind.

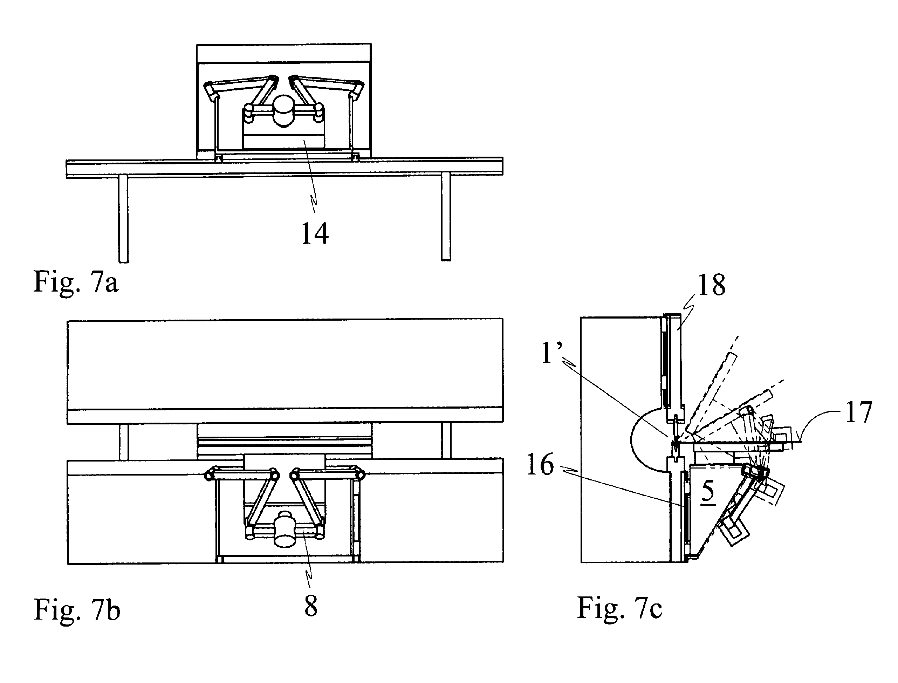

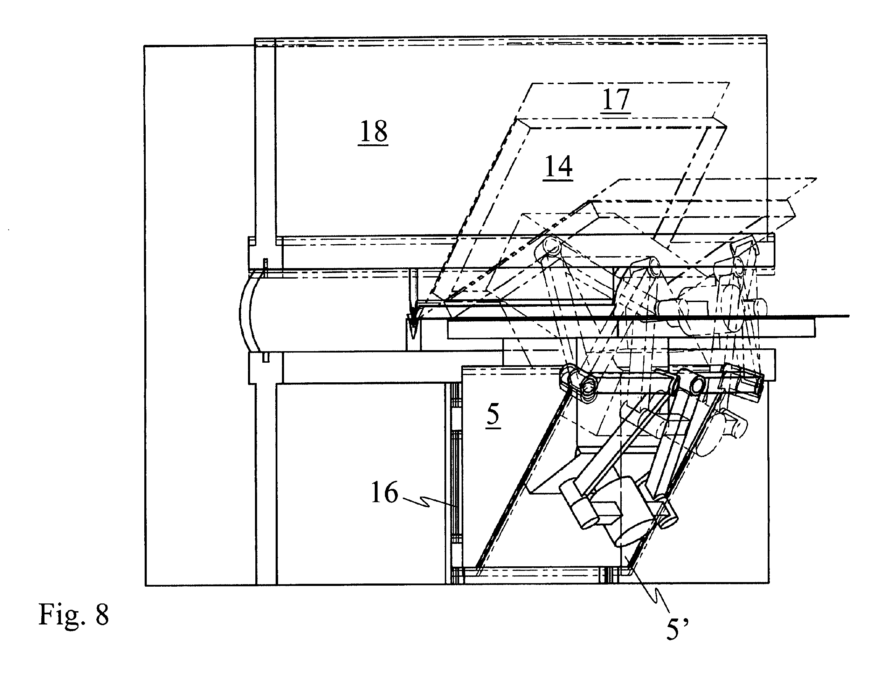

Die Erfindung ist, wie eingangs erwähnt, auch auf anderen Gebieten, bei denen es darauf ankommt, Objekte um eine raumfeste oder zumindest vorrichtungsfeste Achse zu drehen, nützlich:
So zeigen die Fig. 7 und 8 die Verwendung einer erfindungsgemäßen Vorrichtung für eine Biegevorrichtung. Dabei zeigen die Fig. 7a bis 7c verschiedene Ansichten einer solchen Vorrichtung und die Fig. 7c zeigt eine Seitenansicht mit dem Objekthalter in drei verschiedenen Stellungen während eines solchen Biegevorganges. Die Biegeachse 1', entsprechend der Wendeachse 1, fällt mit der Biegeachse bzw. im Falle einer Abkantpresse (die auch unter die Biegevorrichtungen fällt) mit der Abkantlinie zusammen, und es kann, um bei entsprechenden Blechstärken und Biegewinkeln eine korrekte Bewegung zu vollführen, die Basisteile 5, 5' und damit die Vorrichtung als Gesamtes entlang Führungen 16 auf und ab bewegt werden, während die Biegebewegung erfolgt. Dies bedeutet, dass die Biegeachse 1' bezüglich der Wendevorrichtung 2 festgelegt ist, nicht aber bezüglich der Biegevorrichtung.

Wie insbesondere aus Fig. 7b, einer Frontalansicht und aus Fig. 7a, einer Unteransicht, deutlich wird, sind die Basisteile 5, 5' als massive, im Wesentlichen dreieckige Bleche ausgebildet, die die Basisachsen tragen, an denen völlig analog zu den vorstehend erläuterten Vorrichtungen die Oberarme und Unterarme montiert sind, wobei letztere gemeinsam das Zwischenstück 8 tragen, auf dem der Objekthalter 14, im gegenständlichen Fall ein Blechhalter, montiert ist. In diesem Fall erfolgt bevorzugt die Bewegung des Objekthalters durch einen direkt auf ihn wirkenden Antrieb, z.B. einen Linearantrieb, dessen anderes Ende an einem mit den Basisteilen 5, 5' verbundenen Bereich angreift.

Die Arbeitsoberfläche des Objekthalters 14 verläuft, wie aus Fig. 7c ersichtlich ist, zu Beginn des Biegevorgangs waagrecht, ein zu biegendes Blech 17 wird passend darauf positioniert und gegebenenfalls fixiert und ragt mit einem Abschnitt, der um die Biegeachse 1' gebogen werden soll, über diese Biegeachse in hinaus. In der Folge erfolgt die Abwärtsbewegung des Oberteils 18 und die Schwenkbewegung der Biegevorrichtung, gegebenenfalls passend mit der Vertikalbewegung der gesamten Biegevorrichtung und damit des Bleches 17, wodurch das Blech 17 um die bzw. entlang der Biegeachse 1' gebogen wird.

Die Werkzeuge und die Steuerung der Vorschubbewegungen bzw. der Biegebewegung sind auf völlig bekannte Weise in Kenntnis der Kinematik und der Erfindung leicht zu berechnen und bedürfen an dieser Stelle keiner besonderen Erläuterung.

Die Fig. 8 zeigt diese drei Positionen in schräger, aber rein horizontaler Seitenansicht, hier ist die Zustellbewegung des Oberteils 18 und der Arbeitsablauf der gesamten Vorrichtung mit den Basisteilen 5, 5' deutlich zu erkennen, gut zu sehen ist auch, dass die Vorrichtung direkt entlang der Bereiche der Biegeachse 1' angreift, in denen der Biegevorgang des Bleches erfolgt. Damit wird die Durchbiegung des Objekthalters im Vergleich zu den Vorrichtungen nach dem Stand der Technik, bei denen die Krafteinleitung für den verschwenkbaren Blechhalter stets seitlich erfolgt, sodass der mittlere Bereich nach Art eines auf Biegung beanspruchten Balkens von der Ideallinie abgelenkt wird, deutlich minimiert.

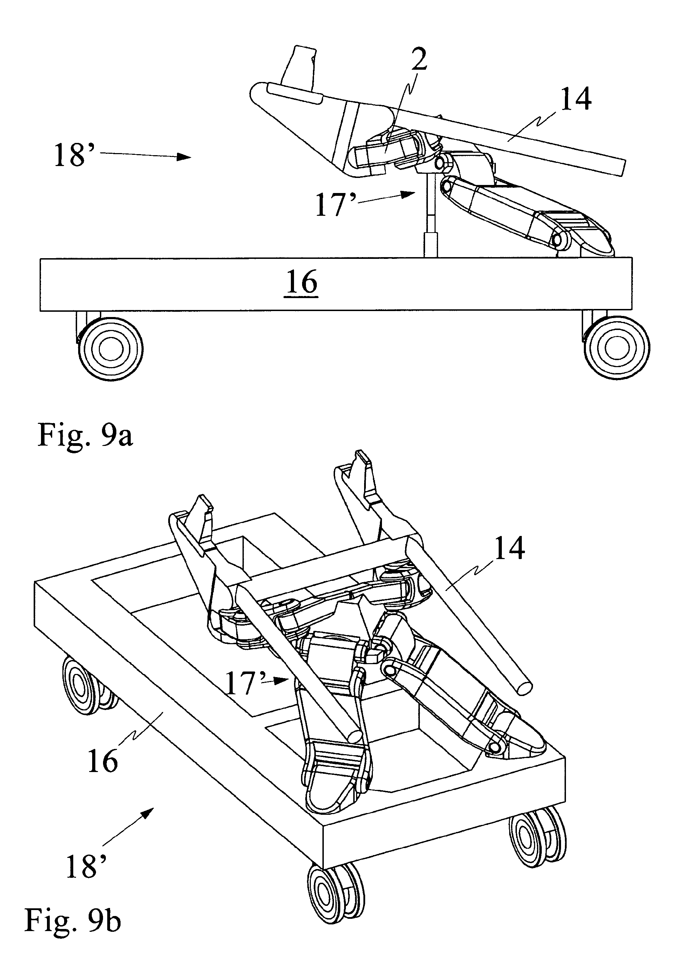

Eine andere Anwendung, im medizinischen Bereich, wird im Folgendendargestellt und erörtert: Die Figuren 9a und 9b zeigen ein Gestell für ein verfahrbares Patientenbett, im medizinischen Jargon zumeist einfach Shuttle 18' oder Patientenshuttle genannt, mit einem unteren, fahrbaren Chassis 16, auf dem ein Höhenverstell-Mechanismus 17' aufgesetzt ist. Der Mechanismus 17' trägt auf seiner oberen Plattform eine erfindungsgemäße Vorrichtung 2, deren freies Ende der Objekthalter 14, bei dieser Ausführungsform oft auch der Kürze wegen einfach Liege 14 genannt, ist.

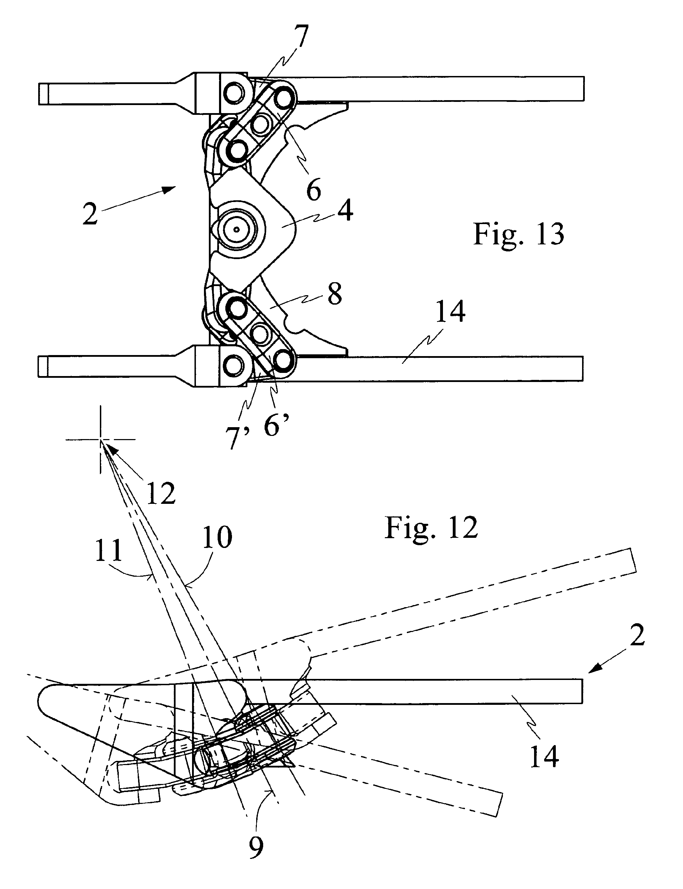

Der erfindungsgemäße Mechanismus 2, wie er hier verwirklicht und dargestellt ist, entspricht funktional vollständig dem Mechanismus 2 der Fig. 2, nur sind die Abmessungen und Proportionen deutlich anders gewählt. Dies ist insbesondere aus der Fig. 12 und der Fig. 13 ersichtlich, die die erfindungsgemäße Vorrichtung 2 des Shuttle 18' für sich darstellen, wobei die einzelnen Bezugszeichen entsprechend der Fig. 2 eingetragen sind. So zeigt die Fig. 13 eine Unteransicht, und die zentrale Platte 4 ist es, die auf dem Höhenverstell-Mechanismus 17' befestigt ist. Von ihr gehen die beiden Oberarme 6, 6' aus, an denen gelenkig die beiden Unterarme 7, 7' befestigt sind. Diese wiederum sind mit dem Zwischenstück 8, das ihnen beiden gemeinsam ist, gelenkig verbunden. Auf dem Zwischenstück 8 ist im dargestellten Ausführungsbeispiel die Liege 14 fest montiert.

In Fig. 12, einer Seitenansicht der Vorrichtung 2, in die zum Darlegen des hohen Schwenkwinkels strichpunktiert auch zwei geneigte Stellungen der Liege 14 eingetragen sind, sind auch die Basisachse 9, die Armachse 10 und die Endachse 11 eingezeichnet. Der Zentralpunkt 12 zeigt, wie exzentrisch die durch ihn festgelegte Wendeachse, die durch ihn und normal zur Darstellungsebene verläuft, zur Vorrichtung 2 selbst ausgebildet werden kann. Wenn man dies mit der Fig. 9 vergleicht, so erkennt man, dass es dadurch möglich wird, die Schwenkachse 12 sehr genau oberhalb des Schwerpunktes der Liege 14 bzw. des nicht dargestellten Patienten zu legen und so für bestmögliche Stabilität zu sorgen.

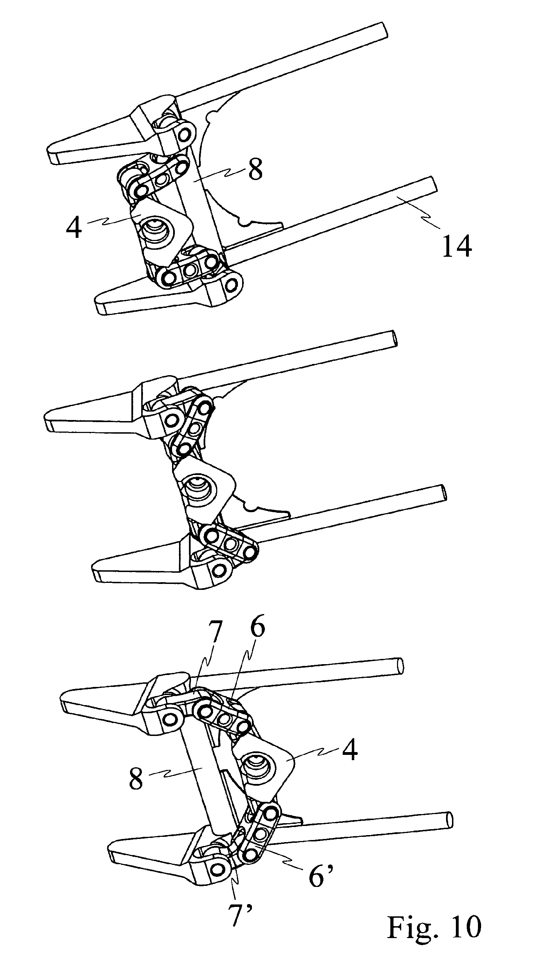

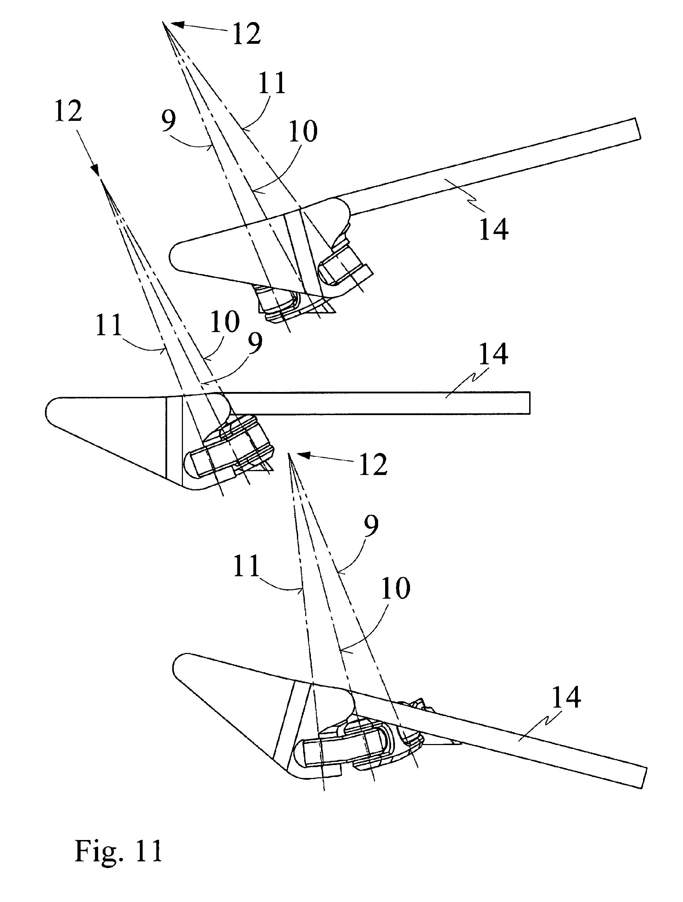

Die Figura 10 und 11 stellen vergrößerte Detailansichten dar und zeigen den äußerst kompakten und praktisch keinen Platz benötigenden Mechanismus der Vorrichtung 2, die trotz dieser kompakten Ausführung einen Schwenkwinkel zu liefern vermag wie er im Stand der Technik nicht erreichbar ist. Gut zu erkennen ist in Fig. 11 auch das "Durchschlagen" der drei Achsen 9, 10 und 11, die in der Seitenansicht je nach Schwenklage ihre Reihenfolge, gesehen von Links nach Rechts (oder auch von Rechts nach Links), ändern, ohne dass dies eine Singularität mit sich brächte.

In Fig. 10 sind besonders die Arme und die Gelenke für die Achsen gut zu erkennen, insbesondere in der dargestellten Abfolge der Bewegung.

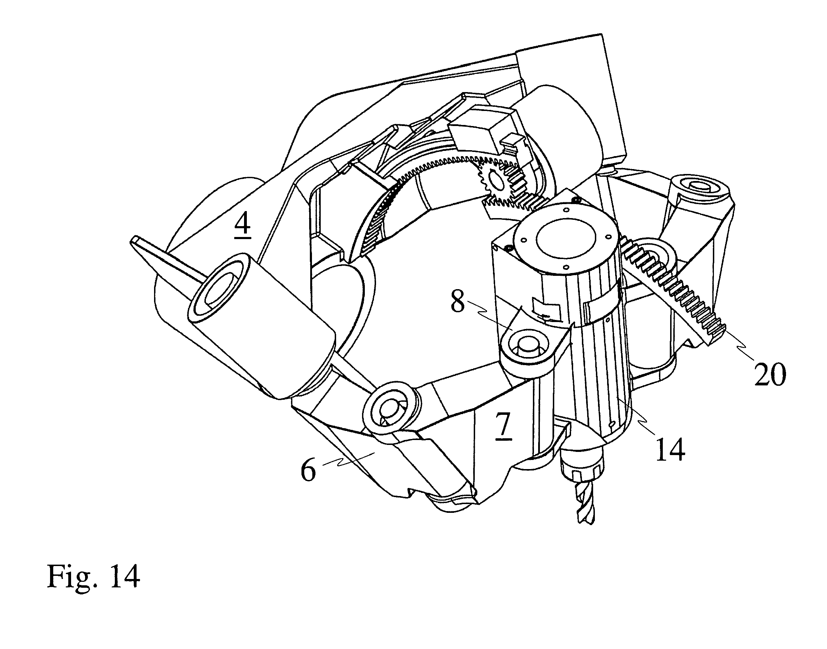

Die Fig. 14 zeigt, wie die Erfindung vorteilhaft auf die Halterung eines Fräsers angewandt werden kann. Die eingetragenen Bezugszeichen stimmen mit denen der Figura 2 bis 8 überein, da auch die Wirkungsweise und Funktionalität die Gleiche wie oben erläutert ist, wird hier nichtsweiter dazu ausgeführt. Als "Antrieb" ist ein Segment 20 einer Verzahnung mit Zahnrad angegeben, dieses kann natürlich durch Motoren in den Armen im Bereich der jeweiligen Drehachsen ersetzt sein, ist aber billig, genau und robust.

Es soll noch ausdrücklich auf die Größenunterschiede der zu verschwenkenden Objekte 19 bei den verschiedenen Anwendungen verwiesen werden, die die universelle Verwendbarkeit der erfindungsgemäßen Vorrichtung belegt.

Die Erfindung ist nicht auf die dargestellten und beschriebenen Ausführungsbeispiele beschränkt, sondern kann verschiedentlich abgewandelt und an die jeweiligen Verhältnisse angepasst werden. So ist es selbstverständlich möglich, die Erfindung auch für stationäre Betten und für Betten ohne Höhenverstellung zu verwenden, insbesondere OP-Tische und Liegen und Tische für die Untersuchung und Behandlung von Patienten (Zahnarztstuhl, Gynäkologenstuhl) können vorteilhaft damit ausgerüstet werden; desgleichen faltbare, leichte Transportliegen und Tansportbahren, wie sie in Krankenwägen und Ambulanzen verwendet werden.

Die benötigten Materialien, wie Edelstahl, Aluminium und entsprechend robuster Kunststoff stehen auf dem Gebiete der Herstellung von Krankenhauseinrichtungen dem Fachmann ausreichend zur Verfügung, in Kenntnis der Erfindung ist es für ihn kein Problem diese entsprechend auszuwählen und zu dimensionieren.

Es wurde die Verstellbarkeit quer zur Liegenlängsachse beschrieben, selbstverständlich ist eine solche Verstellbarkeit statt oder zusätzlich dazu in Längsrichtung der Liege ebenfalls möglich; speziell auf dem Gebiet der Veterinärmedizin kann dies bei großen OP-Tischen etc. Vorteile bringen.

Bei den anderen Anwendungsgebieten sind Abwandlungen naturgemäß in noch größerem Umfang möglich: So kann in Kenntnis der Erfindung und des Anwendungsgebietes die Länge und Positionierung der Arme und/oder die Größe der Winkel zwischen den Achsen verändert werden, es kann der Abstand zwischen den Zentralpunkten 12, 12' an die jeweiligen Anwendungsgebiete angepasst werden, insbesondere das Zwischenstück 8 und seine Verbindung zum Objekthalter (Liege) 14 bzw. die Integration dieser Teile zu einem einzigen Bauteil, ebenso wie die Ausbildung des Objekthalters 14 sind in Kenntnis der Erfindung und des jeweiligen Anwendungsgebietes in weiten Grenzen veränderbar und anpassbar, dies trifft insbesondere auch die Ausbildung der Verschiebevorrichtung zwischen den Zwischenstück und dem Objekthalter. Je nach Anwendungsgebiet ist die Möglichkeit, die relative Lage zwischen Schwerpunkt und Wendeachse zu beeinflussen, mehr oder weniger bedeutsam, wofür oft die Möglichkeit, große Schwenkwinkel mit räumlich kompakten Schwenkvorrichtungen zu erreichen, an Bedeutung gewinnt.

Beim Ausführungsbeispiel betreffend die Biegevorrichtung ist es mehr noch als bei Manipulatoren möglich, zwei oder mehr derartige Vorrichtungen nebeneinander bzw. hintereinander mit fluchtenden Zentralpunkten anzuordnen, um besonders lange zu biegende Bleche gleichmäßig unterstützen zu können, doch dies gehört zu den Auslegungsfreiheiten des Fachmanns in Kenntnis der Erfindung.

Eine weitere Ausgestaltung sieht vor, dass bei zumindest einem der Teilmanipulatoren 3, 3' weitere Arme, die um weitere Armachsen, die allesamt durch den Zentralpunkt 12 gehen, drehbar sind, vorgesehen sind, und dass das Zwischenstück 8 zwischen den beiden letzten Armen, drehbar um deren beiden Endachsen, gelagert ist. Damit wird zwar einerseits eine mechanische Unterbestimmung geschaffen, die durch Antriebe, Federn, etc. auszugleichen ist, aber es wird eine zusätzliche Erhöhung der erreichbaren Schwenkwinkel erzielt.

Die Erfindung ermöglicht es daher so wie das Rhönrad, ein Objekt um eine mechanisch nicht verwirklichte Wendeachse zu drehen. Dabei sind die Gestaltungsmöglichkeiten für die Lage der Wendeachse bezüglich der Basis der Vorrichtung deutlich verbessert und es ist stets die Möglichkeit gegeben, den Schwerpunkt des Objektes tiefer anzuordnen als die Wendeachse, was aus Sicherheitsgründen wichtig ist. Weiters ist es möglich, auf asymmetrische Bearbeitungsbedingungen, sowohl in Richtungen quer zur Wendeachse als auch längs der Wendeachse einzugehen. Darüberhinaus ermöglicht die Erfindung die Verwendung der Vorrichtung auf anderen Anwendungsgebieten als den Wendevorrichtungen für insbesondere große Werkstücke wie Karosserien, Motoren, Gehäuse, etc., insbesondere für Biegevorrichtungen, Roboter, Werkzeughalter bei Werkzeugmaschinen und im medizinischen Bereich; dazu soll noch ausgeführt werden:
In der Medizin und der Rehatechnik ermöglicht die Erfindung eine Erleichterung für die Pfleger und Mediziner, das weitestgehend automatische Umlagern von Patienten wird ermöglicht, das Wundliegen kann durch wiederholtes Ändern der Schräglage und damit der Patientenposition verhindert werden; Trainingsgeräte zur Mobilitätssteigerung oder bei der Reha von Schlaganfallpatienten werden möglich.

In der Fertigungstechnik, der Handhabungstechnik und anderen Gebieten wird das Wenden von Collies, Blechstücken, Werkstücken um bis zu 90° und in Sonderfällen mehr möglich, einschließlich des automatischen bzw. weitgehend automatischen Einlegens von Werkstücken in Bearbeitungsmaschinen; prinzipiell das Drehen von Werkstücken (z.B. auf dem Gebiet der Schweißtechnik als Manipulator oder für Motoren während deren Zusammenbaus) oder Werkzeugen wie Fräskopf, Schneidkopf für Laser, Wasserstrahl, Plasma, etc., Lackierdüsen, als Manipulator bei Inspektionen, Qualitätskontrollen, Sichtkontrollen, wo die einfache händische Beweglichkeit um eine Achse im Bereich des Schwerpunktes nützlich ist.

Bei Montagetischen, für Schweißteile, für Sattelitenantennen, Solarpaneele, etc. die um virtuelle Achsen im Bereich des Brennpunktes gedreht und bei Hagel etc. abgeschwenkt werden müssen.

Für Proben, Werkstückhalter, Werkstückaufnahmen, für mikroskopische bzw. makroskopische Untersuchungen, beispielsweise als Probentisch für ein Rasterelektronenmikroskop, ein Diffraktometer oder Goniometer für Röntgenuntersuchungen, wo zur Winkelbestimmung eine Drehung der Probe um eine virtuelle Achse notwendig bzw. vorteilhaft ist.

Bei Fahrradsätteln, um ihn um den Aufstandspunkt des Radreifens schwenken zu lassen, was das Fahrgefühl verbessert; bei beweglichen Sitzen bzw. Liegen im Zusammenhang mit Computerspielen oder Simulatoren wie Flugsimulatoren oder Simulatoren für Spezialfahrzeuge, z. B. Panzer.

## Patentansprüche

1. Vorrichtung zum Drehen eines Objektes (19) um eine bezüglich der Vorrichtung (2) ortsfeste Achse, wobei die Vorrichtung zwei Teilmanipulatoren (3, 3') aufweist, von denen jeder einen Basisteil (5, 5') besitzt, an dem, um eine Basisachse (9, 9') drehbar, ein Oberarm (6, 6') angelenkt ist, an dem wiederum, um eine Armachse (10, 10') drehbar, ein Unterarm (7, 7') angelenkt ist, der eine Endachse (11, 11') aufweist, wobei die Basisachse, die Armachse und die Endachse jedes Teilmanipulators einander in jeweils einem Zentralpunkt (12, 12') schneiden, und wobei ein Zwischenstück (8) zwischen den beiden Unterarmen (7, 7') drehbar um die beiden Endachsen (11, 11') gelagert ist, das einen Objekthalter (14) für das zu drehende Objekt (19) aufweist bzw. bildet, **dadurch gekennzeichnet dass** die Verbindungslinie der Zentralpunkte (12, 12') eine Wendeachse (1) für das Zwischenstück (8) definiert.

2. Vorrichtung nach Anspruch 1, **dadurch gekennzeichnet, dass** die beiden Teilmanipulatoren (3, 3') symmetrisch bezüglich der Symmetrieebene (13) zwischen den beiden Zentralpunkten (12, 12') aufgebaut sind.

3. Vorrichtung nach Anspruch 1 oder 2, **dadurch gekennzeichnet, dass** die Endachsen (11, 11') jeweils in einer Normalebene zur Wendeachse (1) verlaufen.

4. Vorrichtung nach einem der Ansprüche 1 bis 3, **dadurch gekennzeichnet, dass** der Objekthalter (14) bezüglich des Zwischenstücks (8) in der Richtung zur Wendeachse (1) verschieblich und in verschiedenen Lagen fixierbar ist.

5. Vorrichtung nach einem der voranstehenden Ansprüche, **dadurch gekennzeichnet, dass** die Basisachsen (9, 9') in einer gemeinsamen Ebene liegen.

6. Vorrichtung nach einem der voranstehenden Ansprüche, **dadurch gekennzeichnet, dass** bei zumindest einem Teilmanipulator (3, 3') weitere Arme, die um weitere Armachsen, die durch den Zentralpunkt (12) gehen, drehbar sind, vorgesehen sind, und dass das Zwischenstück (8) zwischen den beiden letzten Armen, drehbar um deren beiden Endachsen, gelagert ist.

7. Vorrichtung nach einem der voranstehenden Ansprüche, **dadurch gekennzeichnet, dass** der Schwerpunkt des zu drehenden Objekts (19) unterhalb der Wendeachse (1) liegt.

8. Vorrichtung nach einem der Ansprüche 1 bis 6, wobei das zu drehende Objekt ein zu biegendes Blech (17) und die Vorrichtung eine Biegevorrichtung (2') ist, **dadurch gekennzeichnet, dass** die Wendeachse (1') die Biegeachse ist.

9. Vorrichtung nach Anspruch 6, **dadurch gekennzeichnet, dass** der Objekthalter (14) zu Beginn des Biegevorganges ein Blech (17) in waagrechter Position trägt, und dass die Basisteile (5, 5') sich unterhalb des Objekthalters (14) befinden.

10. Vorrichtung nach Anspruch 6 oder 7, **dadurch gekennzeichnet, dass** die Basisteile (5, 5') und damit die gesamte Biegevorrichtung (2') an einer Biegemaschine entlang vertikaler Führungen (18) verschiebbar und fixierbar sind.

11. Vorrichtung nach einem der Ansprüche 1 bis 7, **dadurch gekennzeichnet, dass** das zu drehende Objekt (19) eine Patientenliege, ein Bett, ein Behandlungsstuhl, ein Untersuchungsstuhl, insbesondere im zahnmedizinischen oder gynäkologischen Bereich, gegebenenfalls samt Patient, ist.

12. Vorrichtung nach einem der Ansprüche 1 bis 7, **dadurch gekennzeichnet, dass** das zu drehende Objekt (19) ein Werkzeug, insbesondere ein Fräser, ist.

13. Vorrichtung nach einem der Ansprüche 1 bis 7, **dadurch gekennzeichnet, dass** das zu drehende Objekt (19) ein Roboterarm und die Wendeachse (1) die Armachse ist.

## Claims

1. Device for rotating an object (19) about an axis which is fixed in relation to the device (2), the device comprising two partial manipulators (3, 3'), each of which has a base part (5, 5') to which an upper arm (6, 6') is linked so as to be rotatable about a base axis (9, 9'), to which upper arm in turn a lower arm (7, 7') is linked so as to be rotatable about an arm axis (10, 10'), which lower arm has an end axis (11, 11'), the base axis, the arm axis and the end axis of each partial manipulator intersecting with each other in each case at one central point (12. 12'), and a connecting piece (8) being mounted between the two lower arms (7, 7') so as to be rotatable about the two end axes (11, 11') and providing or forming an object holder (14) for the object to be rotated (19), **characterised in that** the connecting line of the central points (12, 12') defines a turning axis (1) for the connecting piece (8).

2. Device according to claim 1, **characterised in that** the two partial manipulators (3, 3') are arranged symmetrically relative to the plane of symmetry (13) between the two central points (12, 12').

3. Device according to either claim 1 or claim 2, **characterised in that** the end axes (11, 11') extend in each case in a normal plane to the turning axis (1).

4. Device according to any of claims 1 to 3, **characterised in that** the object holder (14) is fixable so as to be movable in the direction towards the turning axis (1) relative to the connecting piece (8), and is fixable in various positions.

5. Device according to any of the preceding claims, **characterised in that** the base axes (9, 9') are situated in a common plane.

6. Device according to any of the preceding claims, **characterised in that**, for at least one partial manipulator (3, 3'), additional arms are provided which are rotatable about additional arm axes which pass through the central point (12), and **in that** the connecting piece (8) is mounted between two endmost arms so as to be rotatable about the two end axes thereof.

7. Device according to any of the preceding claims, **characterised in that** the centre of gravity of the object (19) to be rotated is located below the turning axis (1).

8. Device according to any of claims 1 to 6, the object to be rotated being a metal sheet (17) to be bent and the device being a bending device (2'), **characterised in that** the turning axis (1) is the bending axis.

9. Device according to claim 6, **characterised in that** the object holder (14), at the beginning of the bending process, bears a metal sheet (17) in a horizontal position, and **in that** the base parts (5, 5') are located below the object holder (14).

10. Device according to either claim 6 or claim 7, **characterised in that** the base parts (5, 5') and thus the entire bending device (2') can be moved on and fixed to a bending machine along vertical guides (18).

11. Device according to any of claims 1 to 7, **characterised in that** the object (19) to be rotated is a patient couch, a bed, a treatment chair, an examination chair, in particular in the dental or gynaecological field, optionally together with a patient.

12. Device according to any of claims 1 to 7, **characterised in that** the object (19) to be rotated is a tool, in particular a milling cutter.

13. Device according to any of claims 1 to 7, **characterised in that** the object (19) to be rotated is an arm of a robot and the turning axis (1) is the arm axis.

## Revendications

1. Dispositif destiné à entraîner un objet (19) en rotation autour d'un axe fixe par rapport au dispositif (2), sachant que le dispositif présente deux manipulateurs partiels (3, 3'), qui possèdent chacun une partie de base (5, 5') sur laquelle un bras supérieur (6, 6') est articulé de manière à pouvoir tourner autour d'un axe de base (9, 9'), bras sur lequel un bras inférieur (7, 7') est à son tour articulé à rotation autour d'un axe de bras (10, 10'), ledit bras inférieur présentant un axe d'extrémité (11, 11'), sachant que l'axe de base, l'axe de bras et l'axe d'extrémité de chaque manipulateur partiel se croisent en un point central respectif (12, 12') et sachant qu'une pièce intermédiaire (8) est montée entre les deux bras inférieurs (7, 7') à rotation autour des deux axes d'extrémité (11, 11'), pièce qui présente ou forme un porte-objet (14) pour l'objet (19) à tourner, **caractérisé en ce que** la ligne de jonction des points centraux (12, 12') définit un axe de retournement (1) pour la pièce intermédiaire (8).

2. Dispositif selon la revendication 1, **caractérisé en ce que** les deux manipulateurs partiels (3, 3') sont de structure symétrique par rapport au plan de symétrie (13) entre les deux points centraux (12, 12').

3. Dispositif selon la revendication 1 ou 2, **caractérisé en ce que** les axes d'extrémité (11, 11') s'étendent chacun dans un plan normal à l'axe de retournement (1).

4. Dispositif selon l'une des revendications 1 à 3, **caractérisé en ce que** le porte-objet (14) est mobile en translation par rapport à la pièce intermédiaire (8) dans la direction de l'axe de retournement (1), et peut être immobilisé dans différentes positions.

5. Dispositif selon l'une des revendications précédentes, **caractérisé en ce que** les axes de base (9, 9') se situent dans un plan commun.

6. Dispositif selon l'une des revendications précédentes, **caractérisé en ce que**, pour au moins un manipulateur partiel (3, 3'), il est prévu des bras supplémentaires qui sont rotatifs autour d'autres axes de bras qui passent par le point central (12), et **en ce que** la pièce intermédiaire (8) est montée entre les deux derniers bras, à rotation autour de leurs axes d'extrémité.

7. Dispositif selon l'une des revendications précédentes, **caractérisé en ce que** le centre de gravité de l'objet (19) à tourner se situe en dessous de l'axe de retournement (1).

8. Dispositif selon l'une des revendications 1 à 6, sachant que l'objet à tourner est une tôle (17) à plier et que le dispositif est un dispositif de pliage (2'), **caractérisé en ce que** l'axe de retournement (1') est l'axe de pliage.

9. Dispositif selon la revendication 6, **caractérisé en ce que** le porte-objet (14) porte au début de l'opération de pliage une tôle (17) en position horizontale, et **en ce que** les parties de base (5, 5') se trouvent en dessous du porte-objet (14).

10. Dispositif selon la revendication 6 ou 7, **caractérisé en ce que** les parties de base (5, 5') et donc l'ensemble du dispositif de pliage (2') sont, sur une machine de pliage, mobiles en translation et immobilisables le long de guides verticaux (18).

11. Dispositif selon l'une des revendications 1 à 7, **caractérisé en ce que** l'objet (19) à tourner est une table de patient, un lit, un siège de traitement médical, un siège d'analyse médicale, en particulier dans le domaine dentaire ou gynécologique, le cas échéant pourvu du patient.

12. Dispositif selon l'une des revendications 1 à 7, **caractérisé en ce que** l'objet (19) à tourner est un outil, en particulier une fraise.

13. Dispositif selon l'une des revendications 1 à 7, **caractérisé en ce que** l'objet (19) à tourner est un bras de robot et l'axe de retournement (1) est l'axe du bras.
